# EUROPÄISCHE PATENTSCHRIFT

(11) **EP 0 869 031 B1**
(45) Veröffentlichungstag und Bekanntmachung des Hinweises auf die Patenterteilung: **04.06.2003**
(21) Anmeldenummer: 98103966.2
(22) Anmeldetag: 06.03.1998
(51) Int. Cl.: B60Q 1/115

(54) **Verfahren zur Regelung von Leuchtweite und/oder Leuchtrichtung**
Device for controlling the light beam and/or the lighting direction
Dispositif de commande du faisceau d'éclairage et/ou de la direction du fasiceau

(30) Priorität: 04.04.1997 DE 19713884
(43) Veröffentlichungstag der Anmeldung: 07.10.1998
(73) Patentinhaber: ROBERT BOSCH GMBH, 70442 Stuttgart (DE)
(72) Erfinder: Garnitz, Rainer, 31135 Hildesheim (DE); Goldbeck, Jens, 30173 Hannover (DE); Hürtgen, Bernd, 31079 Sibbesse (DE); Pöchmüller, Werner, 31139 Hildesheim (DE)

(56) Entgegenhaltungen:
- EP-A- 0 642 950
- EP-A- 0 761 497
- EP-A- 0 867 336
- WO-A-97/35743
- PATENT ABSTRACTS OF JAPAN vol. 018, no. 319 (M-1623), 17. Juni 1994 & JP 06 072234 A (TOYOTA MOTOR CORP), 15. März 1994 & US 5 660 454 A (MORI) 26. August 1997

## Beschreibung

### Stand der Technik

Die Erfindung geht aus von einem Verfahren zur Regulierung von Leuchtweite und/oder Leuchtrichtung von Scheinwerfern in einem Fahrzeug nach der Gattung des Hauptanspruchs.

Aus dem Stand der Technik ist bekannt, die Straßenausleuchtung mit Scheinwerfern eines Fahrzeugs an äußere Gegebenheiten anzupassen. Diese Anpassung des vertikalen Scheinwerferwinkels, d. h. eine Leuchtweitenregulierung, wird aufgrund von Daten vorgenommen, die z. B. am Fahrzeugfahrwerk gemessene Federwege darstellen. Aus den gemessenen Federwegen läßt sich die Fahrzeuglage gegenüber der Straße bestimmen, wodurch Daten zur Nachregelung der Leuchtweite gewonnen werden. Eine solche Nachregelung der Leuchtweite erfolgt in dem Moment, von einer Verarbeitungs- und Einstellzeit verzögert, in dem das Fahrzeug seinen Fahrzustand ändert. Folglich reagiert die Regelung immer mit einer gewissen Verzögerung auf den aktuellen Zustand des Fahrzeugs.

Aus dem Stand der Technik sind auch horizontale Leuchtrichtungsregulierungen bekannt, wobei die Daten für die Regelung aus der Lenkradstellung gewonnen werden.

Aus EP 0 761 497 (Oberbegriff von Anspruch 1) und US 5 660 454 sind eine Vorrichtung zur Einstellung der Lichtverteilung der Scheinwerfer in einem Fahrzeug bekannt. Mit einem Videosensor wird der Straßenverlauf ermittelt und durch eine Stelleinrichtung die Lichtverteilung der Scheinwerfer dem Straßenverlauf angepasst. Eine Einstellung der Scheinwerfer in eine stationäre Ausgangsposition, falls der Straßenverlauf nicht zuverlässig ermittelt werden kann, findet nicht statt.

EP 0 642 950 beschreibt eine Vorrichtung zur Einstellung der Leuchtweite der Scheinwerfer eines Fahrzeuges durch Messung der Rückstreuung des Scheinwerferlichtes durch einen Videosensor.

Aus EP 0 867 336 ist eine Vorrichtung zur Einstellung der Leuchtweite der Scheinwerfer eines Fahrzeuges durch Messung der Rückstreuung des Scheinwerferlichtes durch zwei lichtempfindliche Sensoren bekannt.

### Vorteile der Erfindung

Das erfindungsgemäße Verfahren zur Regulierung von Leuchtweite und/oder Leuchtrichtung mit den Merkmalen des Hauptanspruchs hat demgegenüber den Vorteil, daß die Regelung auf Daten beruht, die die Anpassung der Scheinwerfereinstellung an den vor dem Fahrzeug liegenden Fahrbahnverlauf ermöglichen. Dadurch wird eine optimale Ausleuchtung der Fahrbahn für das Fahrzeug erreicht.

Durch die in den Unteransprüchen aufgeführten Maßnahmen ist eine vorteilhafte Weiterbildung und Verbesserung des im Hauptanspruch angegebenen Verfahrens möglich.

Besonders vorteilhaft ist es, daß die für die Regelung bedeutsamen Informationen für das Fahrzeug über Videosensoren ermittelt werden. Durch den Einsatz der Videosensoren läßt sich eine vorausschauende Bestimmung des Fahrbahnverlaufs ermöglichen und so eine optimale Ausleuchtung der Fahrbahn erreichen. Vorteilhafterweise kann über die Videosensoren der Nickwinkel des Fahrzeugs bestimmt werden, so daß eine Anpassung der Leuchtweite der Scheinwerfer möglich ist. Es ist ebenfalls von Vorteil, daß über den Videosensor der Gierwinkel des Fahrzeugs bestimmt wird, und die horizontale Leuchtrichtung und/oder Leuchtweite der Scheinwerfer anhand des Gierwinkels aber auch des Fahrbahnverlaufs reguliert wird. Es ist weiterhin von Vorteil, daß die Regulierung aufgrund von Informationen erfolgt, die auch Scheinwerfer anderer Fahrzeuge detektieren kann und so ein eingeschaltetes Fernlicht automatisch abblenden kann. Alternativ dazu kann auch eine Warnung an den Fahrer ausgegeben werden. Zur Erkennung der Scheinwerfer anderer Fahrzeuge wird vorteilhafter Weise ein einfaches Verfahren zur Auswertung der Videodaten angewendet, das mit Hilfe einer Bildverschiebungsschätzung stationäre Lichtquellen und bewegte Scheinwerfer voneinander trennen kann. Vorteilhafter Weise wird bei Erkennung anderer Fahrzeuge nicht nur das Fernlicht abgeschaltet, sondern auch eine Anpassung der Scheinwerfereinstellung vorgenommen.

Vorteilhafter Weise wird über die Bildauswerteinheit überprüft, ob die für die Regelung notwendigen Parameter auswertbar sind. Die Beleuchtungssteuerung reguliert die Scheinwerfer in eine statische Ausgangsposition, wenn die Videodaten keine Informationen zur sinnvollen Einstellung der Scheinwerfer beitragen.

### Zeichnungen

Ein Ausführungsbeispiel der Erfindung ist in der Zeichnung dargestellt und in der nachfolgenden Beschreibung näher erläutert. Es zeigt Figur 1 ein Fahrzeug, Figur 2 das Schema der Scheinwerferregulierung, Figur 3 die Darstellung einer Straßenszene und Figur 4 die Ausleuchtung einer Fahrbahn.

### Beschreibung des Ausführungsbeispiels

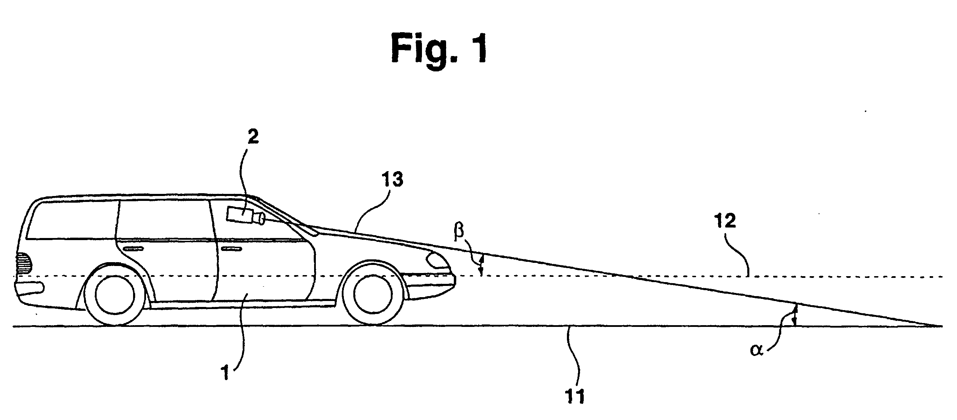

Figur 1 stellt schematisch ein Fahrzeug 1 dar, dessen Fahrzeuglängsachse 12 gestrichelt eingezeichnet ist. Im Fahrzeug befindet sich ein Videosensor 2, dessen Längsachse, die optische Achse 13 in Richtung Fahrbahnebene 11 weist. Die Videosensorlängsachse 13 und die Fahrbahnebene 11 schließen den Winkel α ein. Zwischen Videosensorlängsachse und der Fahrzeuglängsachse 12 ist der Winkel β eingeschlossen.

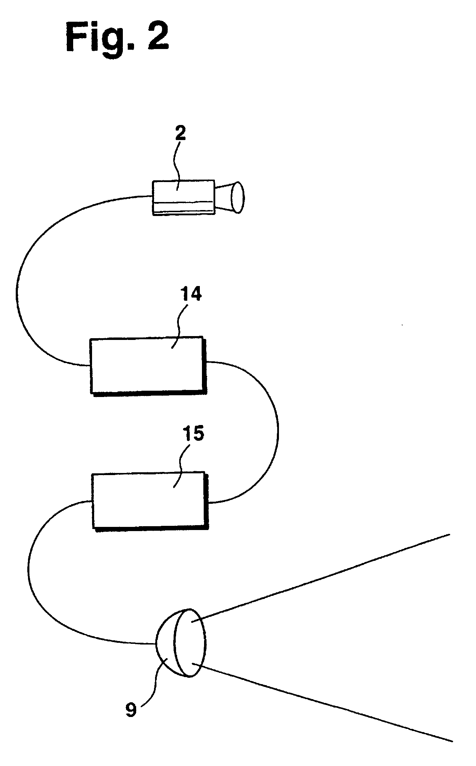

Figur 2 stellt den Videosensor 2 dar, der über ein Kabel mit der Bildauswerteinheit 14 verbunden ist. Über ein weiteres Kabel ist die Bildauswerteeinheit 14 mit einer Steuereinrichtung 15 verbunden, die einen Anschluß für den Scheinwerfer 9 aufweist.

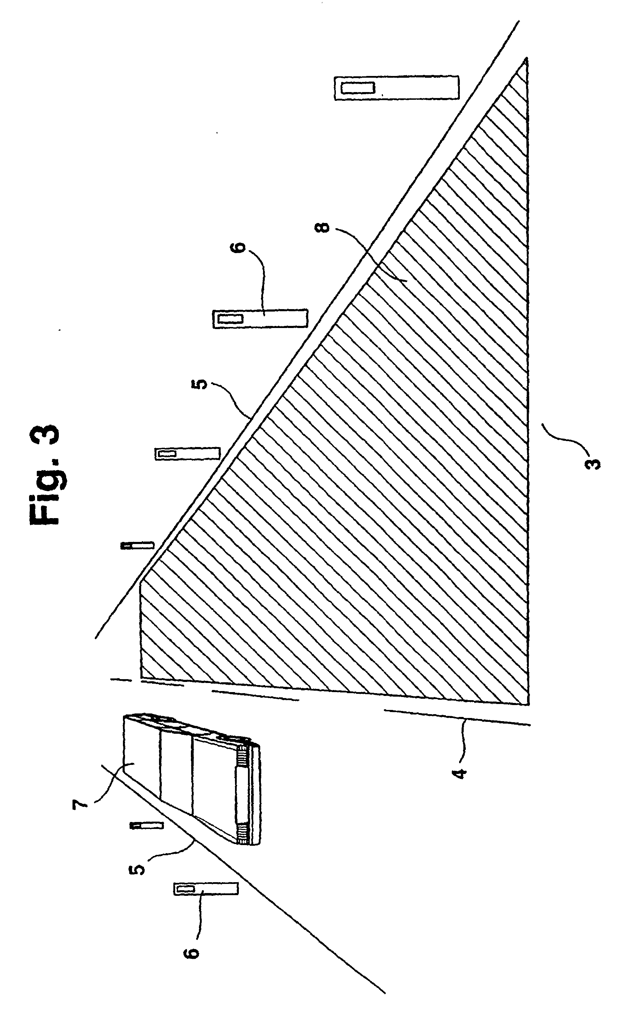

Figur 3 zeigt eine Straßenszene, wobei der Fahrbahnrand mit einer Randmarkierung 5 versehen ist. Die eigene Fahrbahn 3 wird durch den Mittelstreifen 4 von der Gegenfahrbahn getrennt. Am Fahrbahnrand befinden sich Leitpfosten 6. Auf der Gegenfahrbahn ist ein entgegenkommendes Fahrzeug 7 dargestellt. Der auszuleuchtende Bereich 8 ist schraffiert dargestellt.
Um eine Scheinwerfereinstellung zu erreichen, die einer optimalen Ausleuchtung der Fahrbahn dient, muß zunächst die Fahrbahn, ihr weiterer Verlauf, z. B. Kurven oder Steigungen oder Gefälle und entgegenkommende oder vorausfahrende Fahrzeuge erkannt werden. Dazu wird zunächst der Videosensor 2 eingesetzt. Der Videosensor 2 wird im Fahrzeug 1 so angebracht, daß er den vor dem Fahrzeug liegenden Verkehrsraum mit der Fahrbahn 3 betrachtet. Dazu wird der Sensor an möglichst hoher, zentral liegender Position hinter der Windschutzscheibe angebracht, wobei er noch im Bereich des von der Scheibenwaschanlage frei gehaltenen Bereichs der Frontscheibe liegt. Die vom Videosensor 2 erfaßten Bilddaten werden der Bildverarbeitungseinheit 14 zugeführt. In der Bildverarbeitungseinheit findet die Auswertung der Videobilder statt, und es werden die Parameter ermittelt, die für die Steuerung der Scheinwerfer notwendig sind. Die Parameter werden über eine Leitung an die Steuereinrichtung 15 übertragen, die über geeignete Scheinwerferaktuatoren die Scheinwerfereinstellung beeinflußt. Zur optimalen Ausleuchtung eines Bereichs 8 der eigenen Fahrbahn 3 muß in der Bildauswerteeinheit 14 der Verlauf der Fahrspur 3 errechnet werden, allerdings auch der weitere Verlauf der Fahrbahn vorhergesagt werden.

Zur Berechnung des Fahrspurverlaufs kann der Videosensor 2 die Fahrbahnmarkierungen 4 erfassen. Durch ihre Verfolgung läßt sich einerseits die aktuelle Position des Fahrzeugs 1 auf der Straße bestimmen. Die noch nicht veröffentlichte DE 196 7938 beschreibt ein geeignetes Verfahren zur Ermittlung des lateralen Versatzes eines Fahrzeugs zur Fahrspurmitte, sowie des Nickwinkels α und des Gierwinkels. Andererseits kann aufgrund der Videodaten die Bildauswerteeinheit 14 den weiteren Verlauf der Fahrbahn prädizieren, so daß die Scheinwerfer 9 des Fahrzeugs 1 gezielt auf den weiteren Verlauf der Fahrbahn gerichtet werden. Verläuft die Fahrspur 3 vor dem Fahrzeug nach links, so werden die Scheinwerfer weiter nach links gerichtet. Die Einstellung der Scheinwerfer erfolgt sowohl in horizontaler, als auch in vertikaler Richtung. Zur Bestimmung der lateralen Einstellung der Scheinwerfer wird der Gierwinkel des Fahrzeugs sowie der Verlauf der Fahrspur ausgewertet. Außer einer Vorhersage des Fahrbahnverlaufs anhand von Informationen die von der Fahrbahnmarkierung 4 stammen, sind auch Verfahren möglich, bei denen andere Objekte zur Vorhersage des Fahrbahnverlaufs herangezogen werden. So beschreibt z. B. die nicht veröffentlichte DE 19 631 94 ein videobasiertes Verfahren zur Objekterkennung, bei der nicht Markierungen in der Fahrbahnebene, also Mittelstreifen 4 oder Randmarkierungen 5 gesucht werden, sondern Objekte, die nicht zur Fahrbahn gehören. Solche Objekte sind z. B. Leitpfosten 6, Bäume und andere Fahrzeuge. Aufgrund des berechneten freien Bereichs vor dem eigenen Fahrzeug 1 läßt sich die Lage des auszuleuchtenden Bereichs 8 schätzen. Die o. g. DE 19 631 94 verwendet ein stereoskopisches Verfahren. Im Fall eines stereoskopischen Ansatzes muß anstelle eines Videosensors 2 ein Stereokamerapaar angebracht werden. Das Vorhersagen des Fahrbahnverlaufs durch Auswertung der Informationen des Videosensors 2 in der Bildauswerteeinheit 14 ist aufgrund der Komplexität und der großen Vielfalt von Verkehrsszenen nicht einfach. Es ist durchaus möglich, daß aus den Informationen des Videosensors 2 keine eindeutigen, oder im sinnvollen Bereich liegenden Parameter abgeleitet werden können. Aus diesem Grund ist die Bildauswerteeinheit so aufgebaut, daß die Bildverarbeitungsalgorithmen ständig überprüfen, ob die durch den Videosensor 2 beobachtete Szene überhaupt ausgewertet werden kann. Sollte bei einer solchen Überprüfung eine Ableitung der benötigte Parameter aus der Szene nicht möglich sein, hat die Bildauswerteeinheit ein entsprechendes Signal an die Steuereinrichtung 15 weiter zu geben. Die Steuereinrichtung 15 wird in diesem Fall die Fahrzeugbeleuchtung in einen Zustand steuern, der dem einer normalen, statischen Beleuchtung entspricht, so daß keine schlechtere Fahrbahnausleuchtung im Vergleich zu konventionell ausgerüsteten Fahrzeugen erfolgt. Eine solche Einstellungsmöglichkeit ist es, einen geradlinigen Fahrbahnverlauf anzunehmen, und die Scheinwerfer geradeaus zu richten.
Zwar ist auch der laterale Fahrtrichtungsverlauf von Interesse für die Leuchtweitenregelung, z.B. zur Vermeidung der Blendung des Gegenverkehrs insbesonderes in Kurven. Die wesentliche Information hierzu ist jedoch der Nickwinkel des Fahrzeugs gegenüber der vorausliegenden Fahrbahn. Dieser läßt sich aus den Fahrbahnmarkierungen 4, 5 bestimmen. Sind keine Fahrbahnmarkierungen vorhanden, bietet sich vorteilhafterweise die Nickwinkelschätzung über eine Ebenenbestimmung an. Dabei wird der Normalenvektor der Fahrbahnebene berechnet. Dieser kann über Beobachtung beliebiger, durch den Videosensor erfaßter Strukturen in der Fahrbahn erfolgen. Bei bewegtem Fahrzeug kann die Ebenenbestimmung mit einer Kamera erfolgen, bei stehendem Fahrzeug ist ein stereoskopisches Verfahren einzusetzen.
Die Bestimmung des Fahrzeugnickwinkels erfolgt dann durch Vergleich des Ebenennormalvektors mit der Fahrzeuglängsachse. Im Prinzip können auch komplexere Modelle der Fahrbahnmodellierung eingesetzt werdenn, z.B. ein Ansatz mit gewölbten Oberflächen. Dann existiert kein Normalenvektor, der Nickwinkel ist tangential zu bestimmten Punkten der Fahrbahnoberfläche zu bestimmen.

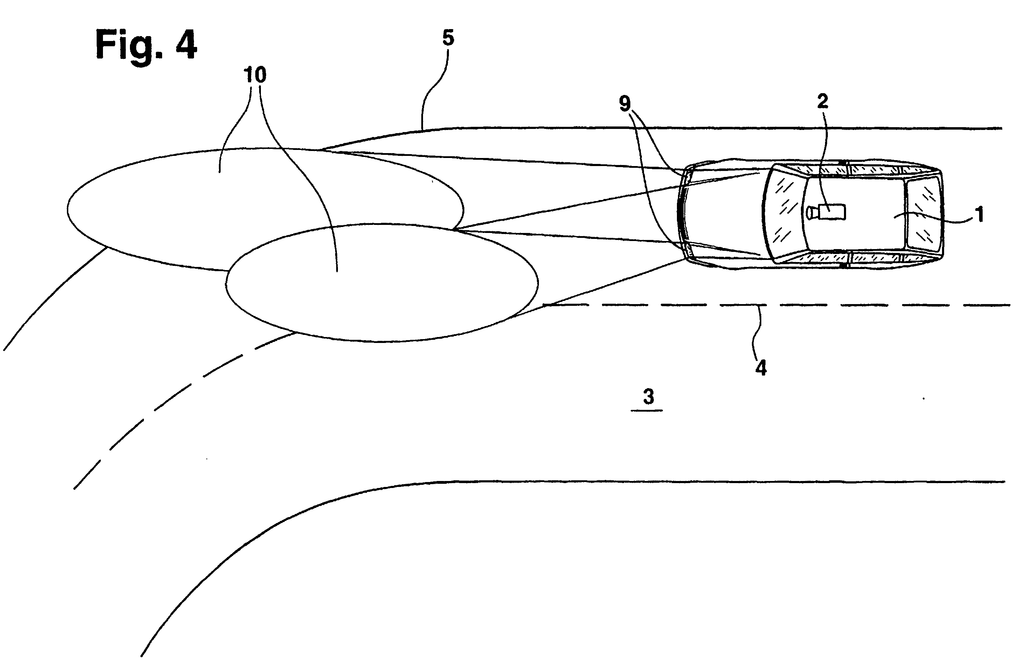

Figur 4 zeigt ein Fahrzeug 1, das auf der eigenen Fahrbahn 3 auf eine Kurve zufährt. Die Fahrbahn 3 wird vom Mittelstreifen 4 und der Randmarkierung 5 begrenzt. Die Scheinwerfer 9 des Fahrzeugs 1 leuchten einen Bereich 10 aus.

Das vom Videosensor 2 erfaßte Videobild enthält Informationen, daß das Fahrzeug sich auf eine Linkskurve zu bewegt. Die vom Videosensor aufgenommenen Informationen werden in der Bildauswerteeinheit 14 ausgewertet und die dadurch erhaltenen Parameter an die Steuereinrichtung 15 und von dort an die Scheinwerfer 9 weitergegeben. Man erkennt, daß der linke Scheinwerfer des Fahrzeugs eine horizontale Abweichung nach links erfährt, und der rechte Scheinwerfer sowohl nach links als auch in vertikaler Lichtrichtung nach oben an den Fahrbahnverlauf in der Kurve angepaßt wurde.

Mit der Regulierung von Leuchtweite und/oder Leuchtrichtung von Scheinwerfern in einem Fahrzeug unter Einsatz von Videosensoren und bildbasierter Objekterkennung eröffnet sich die Möglichkeit, die Fahrbahnausleuchtung auch bei der Benutzung von Fernlicht zu optimieren. Die Optimierung kann sowohl für den Fall, daß man einem vorausfahrenden Fahrzeug folgt, oder daß ein Fahrzeug entgegenkommt, erfolgen. Die Optimierung schließt dabei auch die Umschaltung von Fernauf Nahlicht ein. Um diese Aufgabe zu lösen, muß die Bildverarbeitungseinheit sowohl entgegenkommende als auch vor dem eigenen Fahrzeug vorher fahrende Fahrzeuge erkennen können. Wird ein solches anderes Fahrzeug erkannt und hat das eigene Fahrzeug sein Fernlicht aktiviert, so kann entweder eine automatische Abschaltung des Fernlichts erfolgen, oder eine Fahrerwarnung ausgegeben werden. Nach der Fahrerwarnung liegt es im Aufgabenbereich des Fahrers, die Abblendung manuell durchzuführen. Für den Fall, daß ein Fahrzeug mit Fernlicht unterwegs ist, kann man von den Voraussetzungen ausgehen, daß völlige Dunkelheit herrscht und daß nur eine geringe Anzahl anderer Fahrzeuge im Sichtbereich sind. Unter diesen Voraussetzungen kann man ein stark vereinfachtes Verfahren zur Objektdetektion einsetzen. Dabei betrachtet die Bildauswertungseinheit 14 lediglich hell erleuchtete Punkte, in dem vom Videosensor 2 aufgenommenen Videobild. Unter den vorangehend getroffenen Annahmen, können hellerleuchtete Punkte nur durch Reflexion bzw. Streuung des eigenen Scheinwerferlichts an Gegenständen in oder an der Fahrbahn, sowie von den Beleuchtungsanlagen anderer Fahrzeuge verursacht werden. All diejenigen hellen Stellen im Videobild, die sich mit der Eigengeschwindigkeit des eigenen Fahrzeugs nähern, müssen von Reflektionen bzw. Streuungen an festen Gegenständen herrühren. Alle anderen Lichter hingegen sind voraussichtlich durch bewegte Fahrzeuge verursacht. Wird ein solches detektiert, erfolgt entweder die Fahrerwarnung bzw. das automatische Abblenden. Zur Bewegungsdetektion können bekannte Verfahren zur Bildverschiebungsschätzung herangezogen werden.

Mit einer vereinfachten oder auch komplexeren Objekterkennung ist auch zu verhindern, daß andere Verkehrsteilnehmer geblendet werden. Die Bildverarbeitungseinheit 14 erkennt z. B. ein entgegenkommendes Fahrzeug und regelt die Beleuchtung so nach, daß das entgegenkommende Fahrzeug 7 nur eine minimale Blendung erfährt. Dazu wird die Fahrbahn sowohl vertikal als auch horizontal nur eingeschränkt ausgeleuchtet. Ebenso läßt sich die Leuchtweite reduzieren, wenn die Bildverarbeitungseinheit 14 ein vorausfahrendes Fahrzeug auf der eigenen Spur 3 detektiert. Sobald die Fahrbahn wieder frei ist, kann der voraus- und seitlich liegende Fahrbahnbereich 8 wieder großflächiger ausgeleuchtet werden.

## Patentansprüche

1. Verfahren zur Regulierung von Leuchtweite und/oder Leuchtrichtung von Scheinwerfern (9) in einem Fahrzeug (1),
- wobei die Scheinwerfer (9) aufgrund von Videosensordaten über eine Steuereinrichtung (15) und einen Stellmechanismus eingestellt werden,
- mindestens ein Videosensor (2) Informationen über seine Umgebung sammelt,
- und die Scheinwerfereinstellung an den aufgrund dieses Videosensorsignals ermittelten Straßenverlauf angepaßt wird,
- von den Videosensoren (2) Bilder des Fahrbahnverlaufs aufgenommen werden und von einer Bildauswerteeinheit (14) ausgewertet werden,
- die Informationen der Videosensoren (2) in der Bildauswerteinheit (14) überprüft werden,
**dadurch gekennzeichnet, dass**
- die Scheinwerfer (9) in eine stationäre Ausgangsposition eingestellt werden, wenn aus den Informationen keine sinnvollen Parameter zur Einstellung der Scheinwerfer ableitbar sind.

2. Verfahren zur Regulierung von Leuchtweite und/oder Leuchtrichtung nach Anspruch 1, **dadurch gekennzeichnet, daß** durch Bestimmung des Nickwinkels des Fahrzeug (1) zur Fahrbahn (3) die Leuchtweite der Scheinwerfer reguliert wird.

3. Verfahren zur Regulierung von Leuchtweite und Leuchtrichtung nach Anspruch 1 bis 2, **dadurch gekennzeichnet, daß** der Nickwinkel über eine Ebenenbestimmung der Fahrbahn (3) ermittelt wird.

4. Verfahren zur Regulierung von Leuchtweite und Leuchtrichtung nach Anspruch 1 bis 3, **dadurch gekennzeichnet, daß** durch Bestimmung des Gierwinkels zwischen Fahrzeug (1) und Fahrbahn (3) sowie des Fahrbahnverlaufs die horizontale Leuchtrichtung und/oder Leuchtweite der Scheinwerfer (9) reguliert wird.

5. Verfahren zur Regulierung von Leuchtweite und/oder Leuchtrichtung nach Anspruch 1 bis 4, **dadurch gekennzeichnet, daß** die von der Bildauswerteeinheit (14) Scheinwerfer anderer Fahrzeuge (7) erkannt werden und daß bei eingeschaltetem Fernlicht automatisch abgeblendet oder eine Warnung an den Fahrer ausgegeben wird.

6. Verfahren zur Regulierung von Leuchtweite und/oder Leuchtrichtung nach Anspruch 1 bis 5, **dadurch gekennzeichnet, daß** die Erkennung anderer Fahrzeuge (7) über Auswertung der Informationen der Videosensoren (2) mithilfe einer Bildverschiebungsschätzung vorgenommen wird.

7. Verfahren zur Regulierung von Leuchtweite und/oder Leuchtrichtung nach Anspruch 1 bis 6, **dadurch gekennzeichnet, daß** bei Erkennung anderer Fahrzeuge (7) eine Anpassung der Scheinwerferstellungen vorgenommen wird.

## Claims

1. Method for controlling the lighting range and/or lighting direction of headlamps (9) in a vehicle (1),
- the headlamps (9) being set on the basis of video sensor data via a control device (15) and an actuating mechanism,
- at least one video sensor (2) collecting information about its surroundings,
- the headlamp setting being adapted to the line of the road determined on the basis of this video sensor signal,
- images of the line of the roadway being recorded by the video sensors (2) and evaluated by an image evaluation unit (14), and
- the information of the video sensors (2) being checked in the image evaluation unit (14),
**characterized in that**
- the headlamps (9) are set to a stationary initial position when no rational parameters for setting the headlights can be derived from the information.

2. Method for controlling the lighting range and/or lighting direction according to Claim 1, **characterized in that** the lighting range of the headlamps is controlled by determining the pitching angle of the vehicle (1) in relation to the roadway (3).

3. Method for controlling the lighting range and lighting direction according to Claims 1 to 2, **characterized in that** the pitching angle is ascertained via a determination of the levelness of the roadway (3).

4. Method for controlling the lighting range and lighting direction according to Claims 1 to 3, **characterized in that** the horizontal lighting direction and/or lighting range of the headlights (2) is controlled by determining the yaw angle between the vehicle (1) and roadway (3) and by determining the line of the roadway.

5. Method for controlling the lighting range and/or lighting direction according to Claims 1 to 4, **characterized in that** headlamps of other vehicles (7) are detected by the image evaluation unit (14), and **in that** if the main beam is switched on the beam is dipped automatically or a warning is output to the driver.

6. Method for controlling the lighting range and/or lighting direction according to Claims 1 to 5, **characterized in that** the detection of other vehicles (7) is undertaken via evaluation of the information of the video sensors (2) with the aid of an image displacement estimation.

7. Method for controlling the lighting range and/or lighting direction according to Claims 1 to 6, **characterized in that** on detection of other vehicles (7) an adaptation of the headlight settings is undertaken.

## Revendications

1. Procédé destiné à régler la portée d'éclairage et/ou la direction d'éclairage pour des phares (9) sur un véhicule (1),
- pour lequel les phares (9) sont réglés par une installation de commande (15) et par un mécanisme de réglage sur la base de données d'un détecteur vidéo,
- au moins un détecteur vidéo (2) rassemble des informations sur son environnement,
- et le réglage de phare est ajusté au tracé de route établi sur la base de ce signal de détecteur vidéo,
- des images du tracé de chaussée sont captées par les détecteurs vidéo (2) et sont interprétées par une unité d'interprétation d'images (14),
- les informations des détecteurs vidéo (2) sont contrôlées dans l'interprétation d'images (14),
**caractérisé en ce que**
les phares (9) sont réglés dans une position initiale stationnaire lorsqu'à partir des informations on ne peut pas déduire de paramètres pertinents pour régler les phares.

2. Procédé destiné à régler la portée d'éclairage et/ou la direction d'éclairage selon la revendication 1,
**caractérisé en ce que**
la portée d'éclairage des phares est réglée en déterminant l'angle de tangage du véhicule (1) par rapport à la chaussée (3).

3. Procédé destiné à régler la portée d'éclairage et/ou la direction d'éclairage selon les revendications 1 à 2,
**caractérisé en ce que**
l'angle de tangage est établi au moyen d'une détermination du plan de la chaussée (3).

4. Procédé destiné à régler la portée d'éclairage et/ou la direction d'éclairage selon les revendications 1 à 3,
**caractérisé en ce que**
la portée d'éclairage et/ou la direction d'éclairage horizontale des phares (9) sont réglées en déterminant l'angle d'embardée du véhicule (1) par rapport à la chaussée (3) ainsi que le tracé de chaussée.

5. Procédé destiné à régler la portée d'éclairage et/ou la direction d'éclairage selon les revendications 1 à 4,
**caractérisé en ce que**
les phares d'autres véhicules (7) sont reconnus par l'unité d'interprétation d'images (14) et on passe automatiquement en code ou on envoie un avertissement au conducteur lorsque les feux de route fonctionnent.

6. Procédé destiné à régler la portée d'éclairage et/ou la direction d'éclairage selon les revendications 1 à 5,
**caractérisé en ce que**
la reconnaissance d'autres véhicules (7) est réalisée en interprétant les informations des détecteurs vidéo (2) à l'aide d'une estimation du déplacement des images.

7. Procédé destiné à régler la portée d'éclairage et/ou la direction d'éclairage selon les revendications 1 à 6,
**caractérisé en ce qu'**
un ajustement de la position des phares est réalisé lorsque d'autres véhicules (7) sont reconnus.
